Europäisches Patentamt

European Patent Office

Office européen des brevets

(19)

(11) **EP 1 603 359 A1**

(12) **EUROPEAN PATENT APPLICATION**
published in accordance with Art. 158(3) EPC

(43) Date of publication:
07.12.2005 Bulletin 2005/49

(51) Int Cl.7: **H04Q 7/38**

(21) Application number: 04724775.4

(22) Date of filing: 31.03.2004

(86) International application number:
**PCT/JP2004/004614**

(87) International publication number:
**WO 2004/089028 (14.10.2004 Gazette 2004/42)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: 31.03.2003 JP 2003096746

(71) Applicant: **MATSUSHITA ELECTRIC INDUSTRIAL
CO., LTD.**
**Kadoma-shi, Osaka 571-8501 (JP)**

(72) Inventors:
• **IIDA, Kenichiro**
  **Ykohama-shi, Kanagawa 244-0804 (JP)**
• **FUKUI, Akito**
  **Yokohama-shi, Kanagawa 233-0003 (JP)**
• **ISHIMORI, Takayuki**
  **Yokohama-shi, Kanagawa 233-0002 (JP)**

(74) Representative: **Grünecker, Kinkeldey,
Stockmair & Schwanhäusser Anwaltssozietät
Maximilianstrasse 58
80538 München (DE)**

(54) **RADIO BASE STATION DEVICE, RADIO NETWORK CONTROL DEVICE, AND TRANSFER RATE DECISION METHOD**

(57) A radio base station apparatus in a communication system in which best effort type transmission is carried out between the radio base station apparatus and mobile terminal apparatus through a wireless channel, capable of reducing a wait time inabuffer. The radiobase station apparatus (300) is provided with a determining section (308) that determines a transfer rate of data transferred from a radio network control apparatus (500), a storage section (304) that temporarily stores data transferred from the radio network control apparatus at the transfer rate, a transmission section (301) that transmits the data stored in the storage section to a mobile terminal apparatus by radio, a wait time measuring section (306) that measures a wait time of data in the storage section and a transmission rate calculation section (307) that calculates an average transmission rate of data transmitted by radio to the mobile terminal apparatus, wherein the determining section (308) regards a value obtained by multiplying the average transmission rate by a coefficient according to the wait time as the transfer rate.

FIG.5

**Description**

Technical Field

The present invention relates to a radio base station apparatus, etc., in a mobile communication system in which a so-called best effort type transmission scheme is applied to a communication between a mobile terminal apparatus and radio base station apparatus.

Background Art

Various studies are being currently conducted on the application of an HSDPA (High Speed Downlink Packet Access) technology to data transmission between a mobile terminal apparatus and radio base station apparatus in a mobile communication system. The HSDPA is a technology, standardization of which the 3GPP (3rd Generation Partnership Project) is fostering (e.g., see 3GPP, TS25.401 UTRAN overall description, V3.10.0 and 3GPP, TR25.858 Physical layer aspects of UTRA High Speed Downlink Packet Access, V5.0.0). The HSDPA realizes speed enhancement of a downlink from a radio base station apparatus to a mobile terminal apparatus by applying to a wireless channel, adaptive modulation, H-ARQ (Hybrid Automatic Repeat reQuest), high-speed selection of a mobile terminal apparatus at the communication destination and adaptive control of transmission parameters, etc., according to a situation of the wireless channel.

The HSDPA is a transmission scheme whereby one wireless channel is shared by a plurality of mobile terminal apparatuses, and therefore the HSDPA provides a best effort type communication. In the HSDPA, a plurality of mobile terminal apparatuses report the channel condition of their downlink channels to the radio base station apparatus and the radio base station apparatus schedules the order in which data is transmitted to the plurality of mobile terminal apparatuses.

In order to realize high-speed data transmission such as HADPA in a wireless section between a mobile terminal apparatus and radio base station apparatus, there is a strong demand for a flow control technology capable of improving data transmission throughput in a wired section between the radio base station apparatus and radio network control apparatus. Conventional flow control in the wired section between the radio base station apparatus and radio network control apparatus will be explained below.

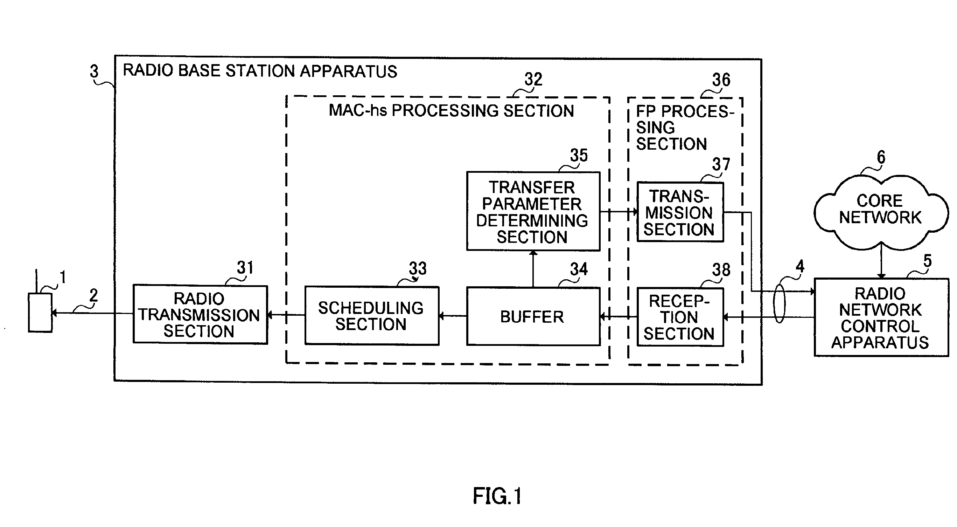

FIG.1 is a block diagram showing the configuration of a conventional mobile communication system.

The mobile communication system shown in FIG.1 is constructed of a mobile terminal apparatus 1, a radio base station apparatus 3, a radio network control apparatus 5 and a core network 6. The mobile terminal apparatus 1 and radio base station apparatus 3 are connected through a wireless channel 2. On the other hand, the radio base station apparatus 3 and radio network control apparatus 5 are connected through a wired channel 4.

The radio network control apparatus 5 transfers data input from the core network 6 to the radio base station apparatus 3 through the wired channel 4 according to flow control. The transferred data is received by a reception section 38 and stored in a buffer 34 temporarily. This temporarily stored data is input to a radio transmission section 31 according to scheduling determined by a scheduling section 33 according to the channel condition of a downlink channel, subjected to predetermined radio processing by the radio transmission section 31, and then sent to the mobile terminal apparatus 1 through the wireless channel 2. Furthermore, a transfer parameter determining section 35 determines a transfer parameter for flow control based on an amount of data stored in the buffer 34. The transfer parameter is sent from a transmission section 37 to the radio network control apparatus 5 through the wired channel 4.

The transmission section 37 and reception section 38 exist in an FP (Frame Protocol) processing section 36 of the radio base station apparatus 3 and carries out transmission/reception based on an HS-DSCH FP (High Speed Downlink Shared Channel Frame Protocol). On the other hand, the scheduling section 33, buffer 34 and transfer parameter determining section 35 exist a MAC-hs (Medium Access Control used for high speed) processing section 32 of the radio base station apparatus 3.

Next, the conventional flow control will be explained. The conventional flow control is carried out based on the amount of data stored in the buffer 34. That is, when the transfer parameter determining section 35 sets a threshold for the amount of data stored in the buffer 34 and the amount of data stored in the buffer 34 is not less than the threshold, the transfer parameter determining section 35 determines a transfer parameter for instructing the radio network control apparatus 5 to stop the data transfer and then when the amount of data stored in the buffer 34 falls below the threshold, the transfer parameter determining section 35 determines a transfer parameter for instructing the radio network control apparatus 5 to restart the data transfer.

The transfer parameter consists of "credits" which indicates the amount of data to be transferred through one data transfer process, "interval" which indicates intervals at which the data transfer process is repeated and "repetition period" which indicates the number of times the data transfer process is repeated.

Thus, the radio base station apparatus 3 instructs the radio network control apparatus 5 on a transfer stop and transfer restart based on the amount of data stored in the buffer 34, and can thereby prevent data transferred from the radio network control apparatus from overflowing the buffer 34 or prevent the buffer 34 from becoming empty, which would interrupt data transmission to the mobile terminal apparatus 1.

Here, since data transmission from the radio base station apparatus 3 to the mobile terminal apparatus 1 through the wireless channel 2 is carried out according to the best effort type HSDPA, the data transmission rate varies with time. Furthermore, the above described conventional flow control always tries to keep the amount of data stored in the buffer 34 of the radio base station apparatus 3 constant regardless of a variation in the transmission rate between the radio base station apparatus 3 and the mobile terminal apparatus 1. Therefore, the time (waittime) during which data is stored in the buffer 34 changes according to the transmission rate between the radio base station apparatus 3 and mobile terminal apparatus 1. For example, when the amount of data stored in the buffer 34 is 64 kbits, the wait time is 1 sec if the transmission rate is 64 kbps, the wait time is 2 sec if the transmission rate is 32 kbps and the wait time is 4 sec if the transmission rate is 16 kbps. That is, the lower the transmission rate between the radio base station apparatus 3 and mobile terminal apparatus 1, the greater the wait time becomes.

Furthermore, when data is discarded due to a transmission error which occurs during transmission between the radio base station apparatus 3 and mobile terminal apparatus 1, data is retransmitted from the radio network control apparatus 5 according to a retransmission request from the mobile terminal apparatus 1. When the transmission rate between the radio base station apparatus 3 and mobile terminal apparatus 1 is low, the wait time in the buffer 34 increases, and therefore the retransmitted data does not immediately arrive at the mobile terminal apparatus 1. When data does not arrive at the mobile terminal apparatus 1 even if a predetermined time has passed, the radio network control apparatus 5 repeats retransmission of the same data. When the retransmission count reaches a predetermined threshold, the radio network control apparatus 5 sends a reset message to the mobile terminal apparatus 1. The mobile terminal apparatus 1 which has received this reset message sends an ACK (ACKnowledgement: positive response) in response to the reset message to the radio network control apparatus 5 and discards all data stored in the own apparatus. Furthermore, the radio network control apparatus 5 which has received the ACK also discards all data stored in the own apparatus. Thus, when all data stored in the mobile terminal apparatus 1 and radio network control apparatus 5 are discarded, their communication is interrupted.

Furthermore, due to a delay in the buffer 34 of the radio base station apparatus 3, if a reset message sent by the radio network control apparatus 5 does not immediately arrive at the mobile terminal apparatus 1 and as a result, the radio network control apparatus 5 may repeat retransmission of the reset message. In this case, when the retransmission count of the reset message reaches a predetermined threshold, the radio network control apparatus 5 decides that there is some error in the wireless channel 2 and disconnects the wireless channel 2 used by the mobile terminal apparatus 1. When the wireless channel 2 is disconnected in this way, the mobile terminal apparatus 1 can no longer receive the communication service which has been used so far.

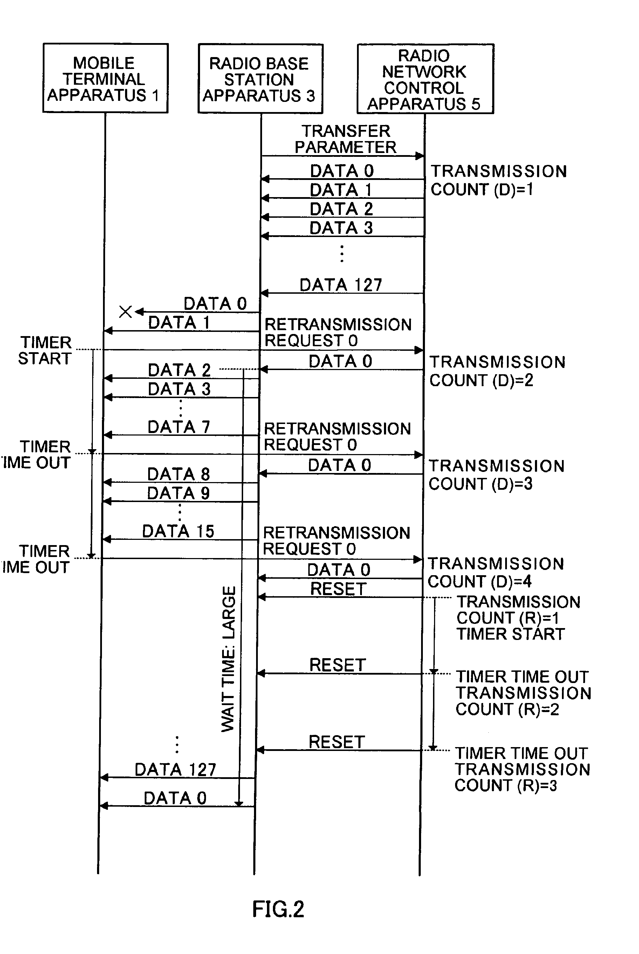

The above described problem will be explained more specifically using a sequence diagram. FIG.2 is an operation sequence diagram of a conventional mobile communication system.

First, the transfer parameter determining section 35 of the radio base station apparatus 3 confirms that the amount of data stored in the buffer 34 is not greater than the threshold and determines a transfer parameter for permitting the data transfer. This transfer parameter is sent from the transmission section 37 to the radio network control apparatus 5.

The radio network control apparatus 5 starts the data transfer according to the instruction of the received transfer parameter. The data 0 to 127 transferred from the radio network control apparatus 5 are stored in the buffer 34 of the radio base station apparatus 3. Then, according to scheduling at the scheduling section 33, the data stored in the buffer 34 are sequentially sent from the radio transmission section 31 to the mobile terminal apparatus 1.

At this time, suppose that data 0 is discarded due to a transmission error in the wireless channel 2. When the mobile terminal apparatus 1 receives next data 1, it detects from the discontinuity of the sequence number that data 0 has been discarded during transmission. As a report of the reception condition, the mobile terminal apparatus 1 transmits a retransmission request of data 0 (retransmission request 0) to the radio network control apparatus 5. At the same time, the mobile terminal apparatus 1 starts a timer for controlling intervals of reporting of the reception condition. When the radio network control apparatus 5 receives the retransmission request 0, it retransmits data 0.

The retransmitted data 0 is stored in the buffer 34 of the radio base station apparatus 3. However, since all the previously stored data have not been transmitted yet, retransmitted data 0 is not immediately transmitted to the mobile terminal apparatus 1. Until the retransmitted data 0 is sent to the mobile terminal apparatus 1, the radio base station apparatus 3 sends other data stored in the buffer 34 (data 2 to 127) to the mobile terminal apparatus 1 sequentially. That is, the retransmitted data 0 remains stored in the buffer 34 until data 127 is sent. As a result, as shown in FIG.2, the wait time of data 0 in the buffer 34 becomes enormous.

Moreover, the mobile terminal apparatus 1 has not received data 0 whose retransmission is requested yet even when the timer times out, and therefore the mobile terminal apparatus 1 sends a retransmission request 0 to the radio network control apparatus 5 again. Every time the radio network control apparatus 5 retransmits the same data (data 0), it counts up a transmission count (D) and when this value reaches a predetermined number of times (4 in the example of FIG.2), the radio network control apparatus 5 sends a reset message to the mobile terminal apparatus 1. As described above, this causes all the data stored in the radio network control apparatus 5 and mobile terminal apparatus 1 to be discarded.

Furthermore, when the reset message sent from the radio network control apparatus 5 does not immediately arrive at the mobile terminal apparatus 1 due to a delay in the buffer 34, the radio network control apparatus 5 retransmits a reset message every time the timer times out. Every time the radio network control apparatus 5 transmits a reset message, it counts up a transmission count (R) and when this value reaches a predetermined number of times (3 in the example of FIG.2), the radio network control apparatus 5 decides it as an error of the wireless channel 2 and disconnects the wireless channel 2 used by the mobile terminal apparatus 1.

Thus, the conventional flow control based on only a wait time in the buffer can be hardly attuned to a communication system (e.g., the above described HSDPA) in which best effort type transmission is carried out through a wireless channel between the radio base station apparatus and mobile terminal apparatus.

Disclosure of Invention

It is an object of the present invention to provide a radio base station apparatus, etc., in a communication system in which best effort type transmission is carried out through a wireless channel between the radio base station apparatus and a mobile terminal apparatus, capable of reducing a wait time in a buffer.

According to an aspect of the present invention, the radio base station apparatus comprises a determining section that determines a transfer rate of data transferred from a radio network control apparatus, a storage section that temporarily stores data transferred from the radio network control apparatus at the transfer rate, a transmission section that transmits the data stored in the storage section to a mobile terminal apparatus by radio, a wait time measuring section that measures a wait time of the data in the storage section and a transmission rate calculation section that calculates an average transmission rate of data transmitted to the mobile terminal apparatus by radio, wherein the determining section uses a value obtained by multiplying the average transmission rate by a coefficient according to the wait time as the transfer rate.

The radio base station apparatus preferably further comprises a data amount measuring section that measures the amount of data stored in the storage section, wherein the wait time measuring section regards a value obtained by dividing the amount of data measured by the data amount measuring section by the average transmission rate calculated by the transmission rate calculation section as the wait time.

The radio base station apparatus preferably further comprises a data amount measuring section that measures an amount of data stored in the storage section, wherein the transmission rate calculation section calculates an actual average transmission rate when the amount of data measured by the data amount measuring section is equal to or greater than a threshold and calculates a virtual average transmission rate when the amount of data measured by the data amount measuring section is less than the threshold.

The radio base station apparatus preferably further comprises an adding section that adds time information to data when the data is input to the storage section, wherein the wait time measuring section measures the wait time from the time indicated by the time information and the time at which the data is output from the storage section.

According to another aspect of the present invention, a radio network control apparatus comprises a transfer section that transfers data to the radio base station apparatus at a transfer rate determined by the radio base station apparatus and a control section that performs retransmission control of data based on a selective retransmission type retransmission control protocol, wherein the transfer section notifies the control section of the transfer rate so as to match the transfer rate at the transfer section to the transfer rate at the control section.

According to a further aspect of the present invention, the transfer rate determining method is a transfer rate determining method used at a radio base station apparatus, comprising the steps of determining a transfer rate of data transferred from a radio network control apparatus, temporarily storing data transferred from the radio network control apparatus at the transfer rate in a buffer and sending the data stored in the buffer to a mobile terminal apparatus by radio, wherein a value obtained by multiplying an average transmission rate of data sent to the mobile terminal apparatus by radio by a coefficient according to a wait time of data in the buffer is regarded as a transfer rate of the data transferred from the radio network control apparatus.

The transfer rate determining method preferably sets the transfer rate of data transferred from the radio network control apparatus to 0 to stop the data transfer when the amount of data stored in the buffer is equal to or greater than a threshold.

Brief Description of Drawings

FIG.1 is a block diagram showing the configuration of a conventional mobile communication system;

FIG.2 is an operation sequence diagram of the conventional mobile communication system;

FIG.3 is a block diagram showing the configuration of a mobile communication system according to an embodiment of the present invention;

FIG.4 is a table stored in the radio base station apparatus according to the embodiment of the present invention;

FIG.5 is a block diagram showing the configuration of another radio base station apparatus according to the embodiment of the present invention;

FIG.6 is a block diagram showing the configuration of the radio network control apparatus according to the embodiment of the present invention; and

FIG. 7 is an operation sequence diagram of the mobile communication system according to the embodiment of the present invention.

Best Mode for Carrying out the Invention

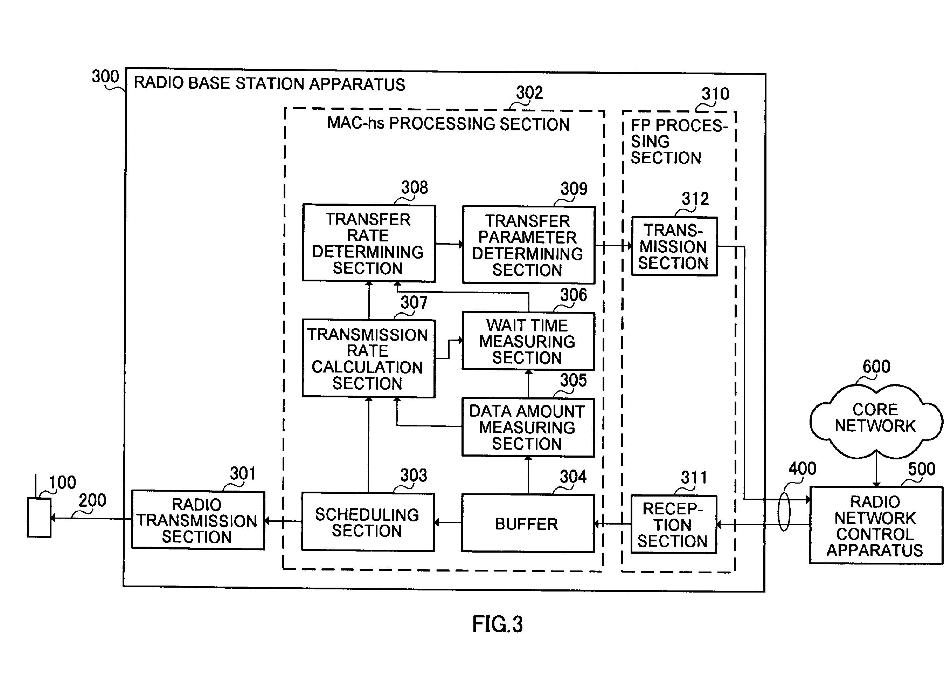

With reference now to the attached drawings, an embodiment of the present invention will be explained in detail below. FIG.3 is a block diagram showing the configuration of a mobile communication system according to an embodiment of the present invention.

The mobile communication system shown in FIG.3 is constructed of a mobile terminal apparatus 100, a radio base station apparatus 300, a radio network control apparatus 500 and a core network 600. The mobile terminal apparatus 100 and the radio base station apparatus 300 are connected by a wireless channel 200. Furthermore, the radio base station apparatus 300 and radio network control apparatus 500 are connected by a wired channel 400. Furthermore, since the wireless channel 200 carries out best effort type transmission, the transmission rate varies with time.

The radio network control apparatus 500 transfers data input from the core network 600 to the radio base station apparatus 300 through the wired channel 400 at a transfer rate instructed from the radio base station apparatus 300. The transferred data is received by a reception section 311 of the radio base station apparatus 300 and temporarily stored in a buffer 304. This temporarily stored data is input to a radio transmission section 301 according to scheduling determined by a scheduling section 303 according to a channel condition of a downlink channel, subjected to predetermined radio processing at the radio transmission section 301 and then transmitted to the mobile terminal apparatus 100 through the wireless channel 200.

A data amount measuring section 305 measures an amount of data stored in the buffer 304. The amount of data measured is notified to a wait time measuring section 306 and a transmission rate calculation section 307.

The transmission rate calculation section 307 calculates an average transmission rate of data transmitted to the mobile terminal apparatus 100 by radio based on information from the scheduling section 303. The scheduling section 303 sends the transmission rate calculation section 307 a scheduling result, that is, information indicating what amount of data of which time slot (which time) has been actually sent to which mobile terminal apparatus or what amount of data could have been transmitted if the communication environment had been such that would always give a transmission opportunity. Thus, the transmission rate calculation section 307 can determine an actual average transmission rate or virtual average transmission rate for each mobile terminal apparatus. For example, when data having a total of 320 kbits for 10 sec has been actually transmitted to the mobile terminal apparatus 100, the actual average transmission rate is calculated to be 32 kbps. Furthermore, in the case where though only an opportunity of transmitting data having a total of 320 kbits for 10 sec has been actually given, data having a total of 3 Mbits could have been transmitted if an opportunity for always transmitting data for 10 sec had been given, the virtual average transmission rate is calculated to be 300 kbps. The transmission rate calculation section 307 calculates either the actual average transmission rate or virtual average transmission rate according to the amount of data measured by the data amount measuring section 305. That is, when the amount of data measured by the data amount measuring section 305 is equal to or greater than a threshold, the actual average transmission rate is calculated and when the amount of data measured by the data amount measuring section 305 is less than the threshold, the virtual average transmission rate is calculated. Thus, the method of calculating an average transmission rate is changed based on the amount of data stored in the buffer 304 and the radio base station apparatus 300 can thereby instruct the radio network control apparatus 500 on an optimal transfer rate even when burst-like traffic occurs. Moreover, the average transmission rate calculated in this way is notified to the wait time measuring section 306 and transfer rate determining section 308.

When there is substantially no possibility that burst-like traffic may occur, instead of changing the method of calculating the average transmission rate as described above, it is also possible to use either the actual average transmission rate or virtual average transmission rate in a fixed manner.

The wait time measuring section 306 measures the data wait time in the buffer 304. The wait time measuring section 306 measures the data wait time in the buffer 304 from the amount of data measured by the data amount measuring section 305 and the transmission rate calculated by the transmission rate calculation section 307 according to following Expression (1):

$$\text{Wait time} = \text{data amount in buffer 304/average transmission rate} \tag{1}$$

That is, the wait time measuring section 306 regards a value obtained by dividing the amount of data measured by the data amount measuring section 305 by the average transmission rate calculated by the transmission rate calculation section 307 as a data wait time in the buffer 304. Calculating the wait time in this way also makes it possible to predict a future wait time and consequently perform appropriate flow control. The wait time measured in this way is notified to the transfer rate determining section 308.

The transfer rate determining section 308 determines a transfer rate of data transferred from the radio network control apparatus 500 to the radio base station apparatus 300 from the average transmission rate calculated by the transmission rate calculation section 307 and the wait time measured by the wait time measuring section 306 according to following Expression (2):

$$\text{Transfer rate} = \text{average transmission rate} \times \alpha \tag{2}$$

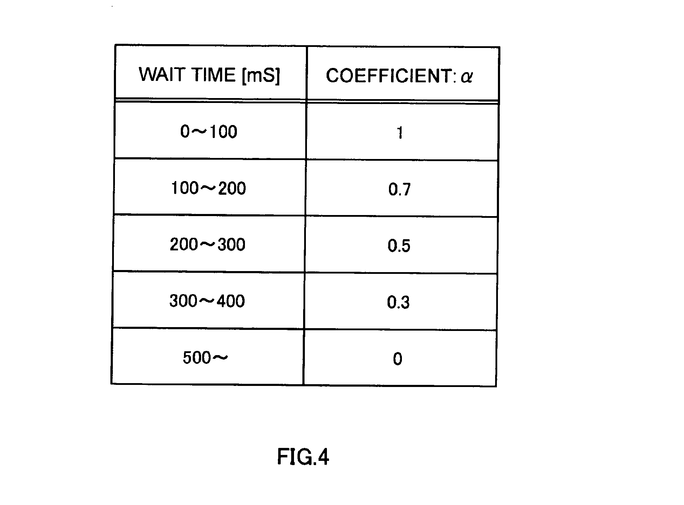

Here, coefficient $\alpha$ in Expression (2) above is a coefficient determined according to the wait time, varies between 0 and 1 and decreases as the wait time increases. For example, the transfer rate determining section 308 has a table shown in FIG.4 and calculates a coefficient $\alpha$ according to the wait time. In the example of FIG.4, $\alpha = 1$ when the wait time is 0 to 100 ms, $\alpha = 0.7$ when the wait time is 100 ms to 200 ms, $\alpha = 0.5$ when the wait time is 200 ms to 300 ms, $\alpha = 0.3$ when the wait time is 300 ms to 400 ms and $\alpha = 0$ when the wait time is 500 ms or above. Thus, from Expression (2) above, the transfer rate decreases as the wait time increases and the transfer rate becomes 0 when the wait time is 500 ms or above. That is, when the wait time is 500 ms or above, a data transfer from the radio network control apparatus 500 to the radio base station apparatus 300 is stopped. In this way, the transfer rate determining section 308 determines a value obtained by multiplying the average transmission rate by a coefficient $\alpha$ which corresponds to the wait time as a transfer rate. The transfer rate determined is notified to the transfer parameter determining section 309.

The transfer parameter determining section 309 determines credits (amount of data to be transferred in a first data transfer process), interval (intervals at which a data transfer process is performed) and repetition period (count of repeating a data transfer process) of transfer parameters so as to reach the transfer rate notified from the transfer rate determining section 308. The transfer parameters determined in this way are sent from a transmission section 312 to the radio network control apparatus 500 through the wired channel 400.

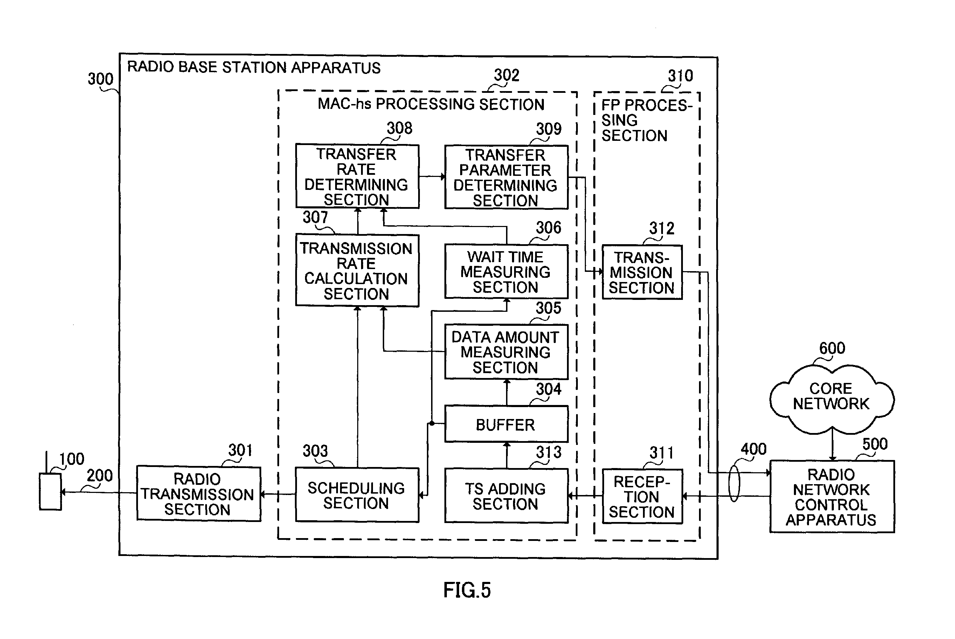

Here, the wait time can also be measured from the configuration shown in FIG.5. That is, the radio base station apparatus 300 has a TS (time stamp) adding section 313 and when data is input to the buffer 304, a time stamp which is time information is added to the data by the TS adding section 313. When the data with a time stamp is output from the buffer 304, the wait time measuring section 306 measures a difference between the time indicated by the time stamp and the time at which the data is output from the buffer 304 as a wait time. By measuring the wait time in this way, it is possible to measure the exact wait time with respect to the current time point and consequently realize accurate flow control.

The transmission section 312 and reception section 311 exist in an FP (Frame Protocol) processing section 310 of the radio base station apparatus 300 and carry out transmission/reception based on an HS-DSCH FP (High Speed Downlink Shared Channel Frame Protocol). Furthermore, the scheduling section 303, buffer 304, data amount measuring section 305, wait time measuring section 306, transmission rate calculation section 307, transfer rate determining section 308, transfer parameter determining section 309 and TS adding section 313 exist in a MAC-hs (Medium Access Control used for high speed) processing section 302 of the radio base station apparatus 300.

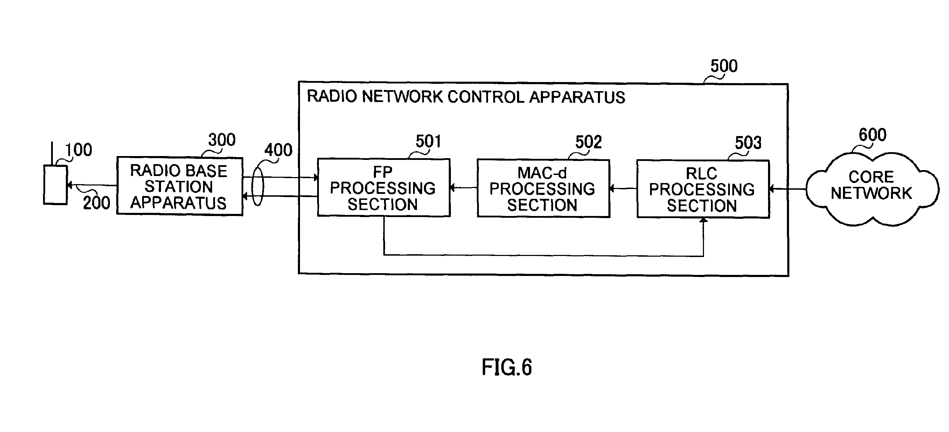

Next, the configuration of the radio network control apparatus 500 will be explained. FIG.6 is a block diagram of the radio network control apparatus according to an embodiment of the present invention. An FP (Frame Protocol) processing section 501 receives a transfer parameter sent from the radio base station apparatus 300 based on an HS-DSCH FP (High Speed Downlink Shared Channel Frame Protocol). Then, the FP processing section 501 transfers the data to the radio base station apparatus 300 according to the transfer parameter. That is, the FP processing section 501 transfers data at a transfer rate determined by the radio base station apparatus 300. Furthermore, the FP processing section 501 sends the received transfer parameter to an RLC (Radio Link Control) processing section 503 so as to match the transfer rate for the data to be transferred to the radio base station apparatus 300 to the rate of the data output from the RLC processing section 503. That is, the FP processing section 501 also notifies the RLC processing section 503 of the transfer rate determined by the radio base station apparatus 300.

Here, the FP processing section 501 may notify the transfer rate to the RLC processing section 503 directly or through an MAC-d processing section 502. The RLC processing section 503 has the function of carrying out retransmission control on data based on a selective retransmission type retransmission control protocol and controls the rate of the data output to the MAC-d processing section 502 to the transfer rate notified from the FP processing section 501.

The MAC-d (MediumAccess Control used for dedicated) processing section 502 carries out MAC-d processing on data input from the RLC processing section 503 and inputs the data to the FP processing section 501. Matching the transfer rate of the data transferred to the radio base station apparatus 300 to the rate of the data output from the RLC processing section 503 prevents the wait time of data in the buffer of the FP processing section 501 from further occurring. This further suppresses a transmission delay from the radio network control apparatus 500 to the mobile terminal apparatus 100.

An RLC process of the selective retransmission type retransmission control protocol carried out by the RLC processing section 503 selects and retransmits NACK and notified data from among the transmitted data based on an ACK or NACK (Negative ACKnowledgement: negative response) notified from the mobile terminal apparatus 100. Furthermore, a MAC-d process carried out by the MAC-d processing section 502 adds a MAC-d header to the data input from the RLC processing section 503 and sends the data to the FP processing section 501. Details of the RLC process and MAC-d process are described in the 3GPP, TS25.321 Medium Access Control (MAC) protocol specification, V3.14.0.

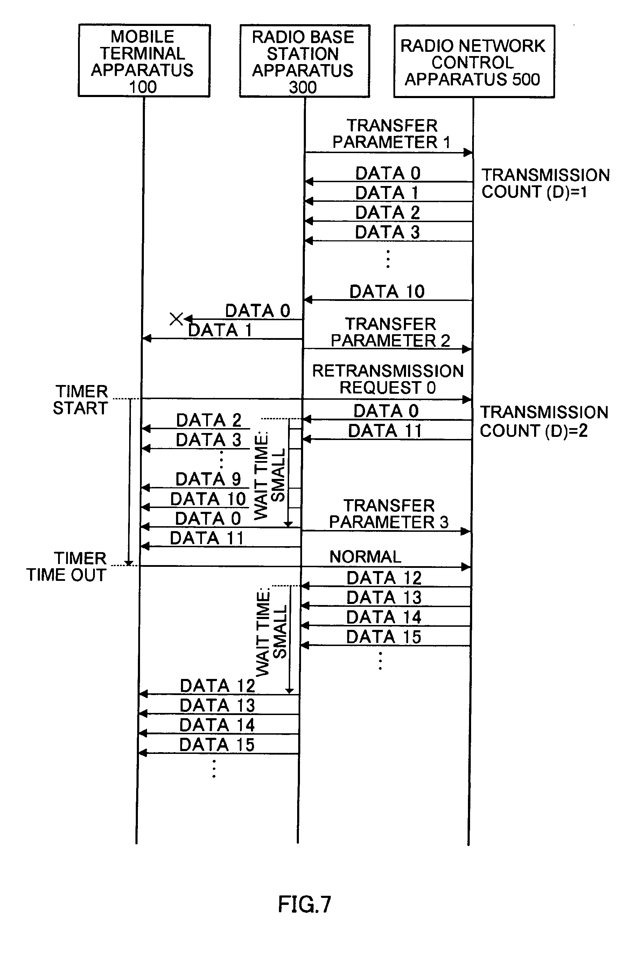

Next, an operation sequence will be explained using FIG.7.

First, the radio base station apparatus 300 determines transfer parameter 1 which permits a data transfer and sends it to the radio network control apparatus 500.

The radio network control apparatus 500 which has received this transfer parameter 1 starts a data transfer according to the instruction of the received transfer parameter 1. Data 0 to 10 transferred from the radio network control apparatus 500 are stored in the buffer 304 of the radio base station apparatus 300. Then, according to the scheduling at the scheduling section 303, the data stored in the buffer 304 are sequentially transmitted to the mobile terminal apparatus 100.

At this time, suppose that data 0 is discarded due to a transmission error in the wireless channel 200. When the mobile terminal apparatus 100 receives next data 1, it detects from the discontinuity of the sequence number that data 0 has been discarded. As the notification of the reception condition, the mobile terminal apparatus 100 sends a request for retransmission of data 0 (retransmission request 0) to the radio network control apparatus 500. At the same time, the mobile terminal apparatus 100 starts a timer for controlling intervals at which the reception condition is notified. When the radio network control apparatus 500 receives retransmission request 0, it retransmits data 0 at a transfer rate instructed by transfer parameter 2. Every time a predetermined time elapses after the transmission of transfer parameter 1, transfer parameter 2 and transfer parameter 3 for instructing the transfer rate determined as described above are sent from the radio base station apparatus 300 to the radio network control apparatus 500.

The retransmitted data 0 is stored in the buffer 304 of the radio base station apparatus 300. Here, the radio base station apparatus 300 determines the transfer rate as shown above, suppresses the wait time in the buffer 304 to a level smaller than the intervals of notification of the reception condition from the mobile terminal apparatus 100 (time from the start to end of the timer of the mobile terminal apparatus 100), and therefore the retransmitted data 0 is output from the buffer 304 within a time smaller than the intervals of notification of the reception condition and sent to the mobile terminal apparatus 100. As a result, it is possible to suppress the wait time of data 0 in the buffer 304 to a small level as shown in FIG.7.

When the timer times out, the mobile terminal apparatus 100 which has received data 0 notifies the radio network control apparatus 500 that all data up to data 11 including the retransmitted data 0 have been received correctly.

Then, the radio network control apparatus 500 which has received the notification of normal reception transfers data 12 and subsequent data at the transfer rate instructed by transfer parameter 3.

Thus, this embodiment takes into consideration both the average transmission rate from the radio base station apparatus to the mobile terminal apparatus and the wait time in the buffer of the radio base station apparatus, determines the transfer rate from the radio network control apparatus to the radio base station apparatus, matches the transfer rate to the rate of the data output from the RLC processing section of the radio network control apparatus, and can thereby prevent the radio network control apparatus from transferring an excessive amount of data to a lower layer.

Furthermore, this embodiment reduces the time required for retransmitted data to arrive at the mobile terminal apparatus even when data retransmission occurs, and can consequently prevent all data stored in the radio network control apparatus and mobile terminal apparatus from being discarded and prevent the wireless channel used by the mobile terminal apparatus from being disconnected.

When a threshold is set for a data amount in the buffer 304 of the radio base station apparatus 300 and the amount of data stored in the buffer 304 exceeds the threshold, it is also possible to set the transfer rate to 0 and thereby stop a data transfer to the radio network control apparatus 500 and on the contrary when the amount of data stored in the buffer 304 is smaller than the threshold, it is possible to carry out flow control using the above described transfer rate determining method. By so doing, it is possible to reliably prevent data transferred from the radio network control apparatus 500 from overflowing the buffer 304.

As described above, the present invention can reduce a wait time in a buffer in a communication system in which best effort type transmission is carried out between a radio base station apparatus and mobile terminal apparatus through a wireless channel.

This application is based on the Japanese Patent ApplicationNo. 2003-96746 filed on March 31, 2003, entire content of which is expressly incorporated by reference herein.

Industrial Applicability

The present invention is suitable for use in a radio base station apparatus, etc., in a mobile communication system.

**Claims**

1. A radio base station apparatus comprising:

   a determining section that determines a transfer rate of data transferred from a radio network control apparatus;
   a storage section that temporarily stores data transferred from said radio network control apparatus at said transfer rate;
   a transmission section that transmits the data stored in said storage section to a mobile terminal apparatus by radio;
   a wait time measuring section that measures a wait time of the data in said storage section; and
   a transmission rate calculation section that calculates an average transmission rate of data transmitted to said mobile terminal apparatus by radio,

   wherein said determining section uses a value obtained by multiplying said average transmission rate by a coefficient according to said wait time as said transfer rate.

2. The radio base station apparatus according to claim 1, further comprising a data amount measuring section that measures the amount of data stored in said storage section,
   wherein said wait time measuring section regards a value obtained by dividing the amount of data measured by said data amount measuring section by the average transmission rate calculated by said transmission rate calculation section as said wait time.

3. The radio base station apparatus according to claim 1, further comprising a data amount measuring section that measures an amount of data stored in said storage section,
   wherein said transmission rate calculation section calculates an actual average transmission rate when the amount of data measured by said data amount measuring section is equal to or greater than a threshold and calculates a virtual average transmission rate when the amount of data measured by said data amount measuring section is less than the threshold.

4. The radio base station apparatus according to claim 1, further comprising an adding section that adds time information to data when the data is input to said storage section,
   wherein said wait time measuring section measures said wait time from the time indicated by said time information and the time at which said data is output from said storage section.

5. A radio network control apparatus comprising:

   a transfer section that transfers data to said radio base station apparatus according to claim 1 at a transfer rate determined by said radio base station apparatus; and
   a control section that performs retransmission control of data based on a selective retransmission type retransmission control protocol,

wherein said transfer section notifies said control section of said transfer rate so as to match the transfer rate at said transfer section to the transfer rate at said control section.

6. A transfer rate determining method used at a radio base station apparatus, comprising the steps of:

determining a transfer rate of data transferred from a radio network control apparatus;
temporarily storing data transferred from said radio network control apparatus at said transfer rate in a buffer; and
sending the data stored in said buffer to a mobile terminal apparatus by radio,

wherein a value obtained by multiplying an average transmission rate of data sent to said mobile terminal apparatus by radio by a coefficient according to a wait time of data in said buffer is regarded as a transfer rate of the data transferred from the radio network control apparatus.

7. The transfer rate determining method according to claim 6, wherein the transfer rate of data transferred from said radio network control apparatus is set to 0 to stop the data transfer when the amount of data stored in said buffer is equal to or greater than a threshold.

FIG.1

EP 1 603 359 A1

FIG.2

FIG.3

| WAIT TIME [mS] | COEFFICIENT: $\alpha$ |
|---|---|
| 0~100 | 1 |
| 100~200 | 0.7 |
| 200~300 | 0.5 |
| 300~400 | 0.3 |
| 500~ | 0 |

FIG.4

EP 1 603 359 A1

RADIO BASE STATION APPARATUS

300

302 — MAC-hs PROCESSING SECTION

310 — FP PROCESSING SECTION

308 — TRANSFER RATE DETERMINING SECTION

309 — TRANSFER PARAMETER DETERMINING SECTION

307 — TRANSMISSION RATE CALCULATION SECTION

306 — WAIT TIME MEASURING SECTION

312 — TRANS-MISSION SECTION

305 — DATA AMOUNT MEASURING SECTION

304 — BUFFER

600 — CORE NETWORK

100

200

301 — RADIO TRANSMISSION SECTION

303 — SCHEDULING SECTION

313 — TS ADDING SECTION

311 — RECEP-TION SECTION

400

500 — RADIO NETWORK CONTROL APPARATUS

FIG.5

FIG.6

EP 1 603 359 A1

| MOBILE TERMINAL APPARATUS 100 | RADIO BASE STATION APPARATUS 300 | RADIO NETWORK CONTROL APPARATUS 500 |

TRANSFER PARAMETER 1

DATA 0 — TRANSMISSION COUNT (D)=1
DATA 1
DATA 2
DATA 3
⋮
DATA 10

DATA 0
× DATA 1

TRANSFER PARAMETER 2

RETRANSMISSION REQUEST 0

TIMER START

DATA 0 — TRANSMISSION COUNT (D)=2
DATA 2
DATA 3
⋮
DATA 9
DATA 10
DATA 0
DATA 11

DATA 11

WAIT TIME: SMALL

TRANSFER PARAMETER 3

TIMER TIME OUT

NORMAL

DATA 12
DATA 13
DATA 14
DATA 15
⋮

WAIT TIME: SMALL

DATA 12
DATA 13
DATA 14
DATA 15
⋮

FIG.7

16

**INTERNATIONAL SEARCH REPORT**

International application No.

PCT/JP2004/004614

| A. CLASSIFICATION OF SUBJECT MATTER |
|---|
| Int.Cl$^7$ H04Q7/38 |

According to International Patent Classification (IPC) or to both national classification and IPC

| B. FIELDS SEARCHED |
|---|
| Minimum documentation searched (classification system followed by classification symbols)<br>Int.Cl$^7$ H04B7/24-7/26, H04Q7/00-7/38 |

Documentation searched other than minimum documentation to the extent that such documents are included in the fields searched

| Jitsuyo Shinan Koho | 1922–1996 | Toroku Jitsuyo Shinan Koho | 1994–2004 |
|---|---|---|---|
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2000-78146 A  (Nippon Telegraph And Telephone Corp.),<br>14 March, 2000 (14.03.00),<br>Abstract; Claim 8; Figs. 8, 9<br>(Family: none) | 1-7 |
| A | JP 2001-61187 A  (NTT Docomo Inc.),<br>06 March, 2001 (06.03.01),<br>Full text; all drawings<br>(Family: none) | 1-7 |
| A | JP 2002-77987 A  (NTT Docomo Inc.),<br>15 March, 2002 (15.03.02),<br>Full text; all drawings<br>(Family: none) | 1-7 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 July, 2004 (05.07.04) | 27 July, 2004 (27.07.04) |

| Name and mailing address of the ISA/ | Authorized officer |
|---|---|
| Japanese Patent Office | |
| Facsimile No. | Telephone No. |

Form PCT/ISA/210 (second sheet) (January 2004)